# EUROPEAN PATENT APPLICATION

(11) **EP 4 459 767 A1**
(43) Date of publication of application: **06.11.2024**
(21) Application number: 22928295.9
(22) Date of filing: 17.11.2022
(51) Int. Cl.: H01M 50/271

(54) **BATTERY BOX BODY UPPER COVER, BATTERY BOX BODY, BATTERY, AND ELECTRICAL DEVICE**

(30) Priority: 23.02.2022 CN 202220383897 U
(71) Applicant: Contemporary Amperex Technology Co., Limited, Ningde, Fujian 352100 (CN)
(72) Inventor: MIAO, Huimin, Ningde, Fujian 352100 (CN); YU, Xiaoyin, Ningde, Fujian 352100 (CN); PAN, Xin, Ningde, Fujian 352100 (CN)
(74) Representative: Thoma, Michael
(86) International application number: PCT/CN2022/132405
(87) International publication number: WO 2023/160034

(57) **Abstract**

A battery box upper cover is provided, including a top wall, a side wall, and an edge portion, which pertains to the field of battery technologies. A first end of the side wall is connected to the top wall, an opening of the battery box upper cover is formed at a second end of the side wall, and the second end is connected to the edge portion. The edge portion extends along a first direction at the second end, the first direction being parallel to a plane on which the opening is located and away from the opening, a second surface of the edge portion is inclined toward the plane on which the opening is located along the first direction, and a first surface of the edge portion is away from the top wall relative to the second surface. The technical solution provided in the embodiments of this application can solve the problem of insufficient safety performance of the battery, thereby improving the safety performance of the battery.

## Description

### CROSS-REFERENCE TO RELATED APPLICATIONS

This application claims the priority of Chinese Patent Application 202220383897.0, titled "BATTERY BOX UPPER COVER, BATTERY BOX, BATTERY, AND ELECTRIC DEVICE", filed on February 23, 2022, which is incorporated herein by reference in its entirety.

### TECHNICAL FIELD

This application relates to the field of battery technologies, and more specifically, to a battery box upper cover, a battery box, a battery, and an electric device.

### BACKGROUND

With increasing environmental pollution, the new energy industry has attracted growing attention. For the new energy industry, battery technologies are an important factor in connection with its development.

The safety performance of the battery is an important parameter of the battery's performance. Therefore, how to improve the safety performance of the battery is an urgent technical problem to be solved in battery technologies.

### SUMMARY

Embodiments of this application provide a battery box upper cover, a battery box, a battery, and an electric device, to solve the problem of insufficient safety performance of the battery, thereby improving the safety performance of the battery.

According to a first aspect, a battery box upper cover is provided, including a top wall, a side wall, and an edge portion; where a first end of the side wall is connected to the top wall, an opening of the battery box upper cover is formed at a second end of the side wall, and the second end is connected to the edge portion; and the edge portion extends along a first direction at the second end, the first direction being parallel to a plane on which the opening is located and away from the opening, a second surface of the edge portion is inclined toward the plane on which the opening is located along the first direction, and a first surface of the edge portion is away from the top wall relative to the second surface.

In the embodiments of this application, by setting the second surface of the edge portion to be inclined toward the plane on which the opening is located along the first direction, and the first surface of the edge portion to be away from the top wall relative to the second surface, accumulated water flowing down from the top wall can flow out of the battery box upper cover along the second surface of the edge portion. The above setting solves the problem of insufficient safety performance of the battery and improves the safety performance of the battery.

In one possible implementation, the first surface is parallel to the plane on which the opening is located. This facilitates the fit between the battery box upper cover and the lower box.

In one possible implementation, a surface of the top wall away from the opening is provided with a recessed portion, and a bottom wall of the recessed portion extends to the first end, where at the first end, the bottom wall of the recessed portion is flush with the side wall. In this way, the provided recessed portion serves to enhance the structure, and additionally, facilitates the smooth flow of accumulated water and impurities on the top wall through the recessed portion, thereby solving the problem of accumulated water and impurities on the battery box upper cover.

In one possible implementation, the surface of the top wall away from the opening is provided with multiple rows of recessed portions arranged along the first direction. This is conducive to further enhancing the structural strength of the battery box upper cover.

In one possible implementation, reinforcing ribs are provided at the connection between the side wall and the edge portion. In this way, the reinforcing ribs enhance the structure at the connection between the edge portion and the side wall, preventing significant deformation of the edge portion that would lead to a deterioration in the sealing performance of the battery box upper cover, and also facilitates the reduction of the thickness of the edge portion.

In one possible implementation, the reinforcing rib is a plate of a triangular shape, and the reinforcing rib includes a first edge, a second edge, and a third edge; where the first edge is connected to the side wall; the second edge is connected to the second surface of the edge portion; and two ends of the third edge are respectively connected to the side wall and the second surface. In this way, the reinforcing rib abuts against and fills the connection between the edge portion and the side wall, further enhancing the connection strength between the edge portion and the side wall.

In one possible implementation, the edge portion is provided with a through hole penetrating the first surface and the second surface and an insert, the insert is embedded in the through hole, and the insert is configured to connect to a connecting member that fixes the battery box upper cover to a corresponding lower box. In this way, the connection and sealing between the edge portion with an inclined second surface and the corresponding lower box are implemented, thereby implementing the connection and sealing between the battery box upper cover and the corresponding lower box.

In one possible implementation, the insert and the edge portion are integrally formed. This forming structure is conducive to saving the process and is convenient for molding.

In one possible implementation, the insert includes an embedded part and a protruding part, where the embedded part is embedded in the through hole, and the protruding part protrudes from the second surface. In this way, the embedded part is embedded in the through hole and connected to the edge portion, and the protruding part is connected to the connecting member that connects the battery box upper cover and the corresponding lower box.

In one possible implementation, a top surface of the protruding part away from the edge portion is parallel to the plane on which the opening is located. This is conducive to the fit between the protruding part and the connecting member, increasing the reliability of the connection.

In one possible implementation, a reinforcing member is provided at the periphery of the protruding part, and the reinforcing member is fixedly connected to the protruding part. In this way, the structural strength of the protruding part is increased, thereby increasing the structural strength and reliability of the insert.

In one possible implementation, the reinforcing member includes a connecting ring and a guiding rib, the connecting ring is connected around the protruding part, and the guiding rib is connected to the connecting ring and extends away from the connecting ring. In this way, the connecting ring enhances the structural reliability of the insert, and the guiding rib facilitates guiding accumulated water and impurities to flow out in a direction away from the connecting ring, that is, guiding accumulated water and impurities to flow out from the edge portion.

In one possible implementation, the reinforcing member includes three guiding ribs evenly spaced apart around the connecting ring, and one of the three guiding ribs extends toward the side wall in a direction opposite the first direction. This is conducive to guiding accumulated water and impurities to flow out, and also conducive to enhancing the structural strength of the connecting ring.

In one possible implementation, the battery box upper cover is an integrally injection-molded structure. In this way, one-time molding of the battery box upper cover can be implemented.

According to a second aspect, a battery box is provided, including: the battery box upper cover according to the first aspect or any possible implementation of the first aspect; and a lower box, where the battery box upper cover and the lower box fit together to form an accommodating space.

According to a third aspect, a battery is provided, including: battery cells and the box according to the second aspect, where the box is configured to accommodate the battery cells.

According to a fourth aspect, an electric device is provided, including the battery according to the third aspect, where the battery is configured to provide electrical energy.

In the embodiments of this application, by setting the second surface of the edge portion to be inclined toward the plane on which the opening is located along the first direction, and the first surface of the edge portion to be away from the top wall relative to the second surface, accumulated water flowing down from the top wall can flow out of the battery box upper cover along the second surface of the edge portion. The above setting solves the problem of insufficient safety performance of the battery and improves the safety performance of the battery.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts.
FIG. 1 is a schematic diagram of a vehicle according to an embodiment of this application;
FIG. 2 is a schematic diagram of a battery according to an embodiment of this application;
FIG. 3 is a schematic diagram of a battery cell according to an embodiment of this application;
FIG. 4 is a schematic diagram of a battery box upper cover according to an embodiment of this application;
FIG. 5 is an enlarged schematic diagram of area A in FIG. 4;
FIG. 6 is a schematic diagram of the battery box upper cover in FIG. 4 from another perspective;
FIG. 7 is a side view of a partial structure of a battery box upper cover according to an embodiment of this application;
FIG. 8 is a cross-sectional view of a partial structure of a battery box upper cover according to an embodiment of this application;
FIG. 9 is a top view of a partial structure of a battery box upper cover according to an embodiment of this application; and
FIG. 10 is a schematic diagram of a reinforcing member according to an embodiment of this application.

### DESCRIPTION OF EMBODIMENTS

The following describes the technical solutions in the embodiments of this application with reference to the accompanying drawings. The detailed description of the embodiments and the accompanying drawings are intended to illustrate the principle of this application, rather than to limit the scope of this application, meaning this application is not limited to the embodiments described herein.

In the description of this application, it should be noted that unless otherwise specified, all technical and scientific terms used shall have the same meanings as commonly understood by those skilled in the art to which this application relates. The terms used are intended to merely describe the specific embodiments rather than to limit this application. The terms "include", "include", and "have" and any other variations thereof in the specification, claims and brief description of drawings of this application are intended to cover non-exclusive inclusions; "multiple" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely intended for a purpose of description, and shall not be understood as any indication or implication of relative importance. "Perpendicular" is not perpendicular in the strict sense but within an allowable range of error. "Parallel" is not parallel in the strict sense but within an allowable range of error.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described in this application may be combined with other embodiments.

The orientation terms appearing in the following description all refer to directions shown in the figures, and do not limit the specific structure of this application. In the description of this application, it should be further noted that unless otherwise specified and defined explicitly, the terms "mount", "connect", and "join" should be understood in their general senses. For example, they may refer to a fixed connection, a detachable connection, or an integral connection, and may refer to a direct connection, an indirect connection via an intermediate medium, or an internal communication between two elements. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between the contextually associated objects.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes. This is not limited in the embodiments of this application either. Battery cells are typically divided into three types by packaging method: cylindrical cell, prismatic cell, and pouch cell. This is not limited in the embodiments of this application either.

The battery mentioned in the embodiments of this application is a single physical module that includes one or more battery cells for providing a higher voltage and capacity. For example, the battery mentioned in this application may include a battery pack or the like. A battery typically includes a box configured to enclose one or more battery cells. The box can prevent liquids or other foreign matter from affecting charging or discharging of the battery cell.

The battery cell includes an electrode assembly and an electrolyte. The electrode assembly includes a positive electrode plate, a negative electrode plate, and a separator. The battery cell functions mainly relying on migration of metal ions between the positive electrode plate and the negative electrode plate. The positive electrode plate includes a positive electrode current collector and a positive electrode active substance layer. The positive electrode active substance layer is coated on a surface of the positive electrode current collector. The part of current collector uncoated with the positive electrode active substance layer protrudes from the part of current collector coated with the positive electrode active substance layer and serves as a positive electrode tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is coated on a surface of the negative electrode current collector. The part of current collector uncoated with the negative electrode active substance layer protrudes from the part of current collector coated with the negative electrode active substance layer and serves as a negative electrode tab. The negative electrode current collector may be made of copper, and the negative electrode active substance may be carbon, silicon, or the like. To allow a high current to pass through without any fusing, multiple positive electrode tabs are provided and stacked together, and multiple negative electrode tabs are provided and stacked together. The separator may be made of polypropylene (PP), polyethylene (PE), or the like. In addition, the electrode assembly may be a wound structure or a laminated structure. However, the embodiments of this application are not limited thereto.

To meet different power requirements, the battery may include multiple battery cells, and the multiple battery cells may be connected in series, parallel, or series-parallel, where being connected in series-parallel means a combination of series and parallel connections. Optionally, multiple battery cells may be connected in series, parallel, or series-parallel to form a battery module first, and then multiple battery modules are connected in series, parallel, or series-parallel to form a battery. In a word, the multiple battery cells may be directly combined into a battery, or may first be combined into battery modules that are then combined into a battery. The battery is further provided in an electric device to supply electrical energy to the electric device.

The development of battery technology needs to consider multiple design factors, such as energy density, cycle life, discharge capacity, charge-discharge rate, and safety. With the development of battery technology, the requirements for the safety performance of batteries are also increasing. In various application scenarios of batteries, batteries are usually connected to other battery-using devices, such as electric vehicles. For example, the battery is provided at the bottom of the electric vehicle and is fixedly connected to the vehicle. When the battery is connected to the floor of the vehicle body, there is often accumulated water and impurities in the installation gap between the two. Long-term accumulated water and impurities may cause corrosion to the floor of the vehicle body and the battery, especially the battery box upper cover, affecting the safety performance of the battery.

In view of this, the embodiments of this application provide a technical solution. The battery box upper cover includes a top wall, a side wall, and an edge, where one end of the side wall is connected to the top wall, another end is connected to the edge portion, and an opening is formed at that end; and the second surface of the edge portion is inclined so that accumulated water and impurities can flow down along the second surface. Therefore, the technical solution of the embodiments of this application can solve the problem of insufficient safety performance of the battery, thereby improving the safety performance of the battery.

The technical solutions described in the embodiments of this application are applicable to various apparatuses that use batteries, for example, mobile phones, portable devices, notebook computers, electric bicycles, electric toys, electric tools, electric vehicles, ships, and spacecrafts. For example, the spacecrafts include airplanes, rockets, space shuttles, and spaceships.

It should be understood that the technical solutions described in the embodiments of this application are not only applicable to the devices described above, but also applicable to all devices using batteries. However, for brevity of description, electric vehicles are used as an example for description in the following embodiments.

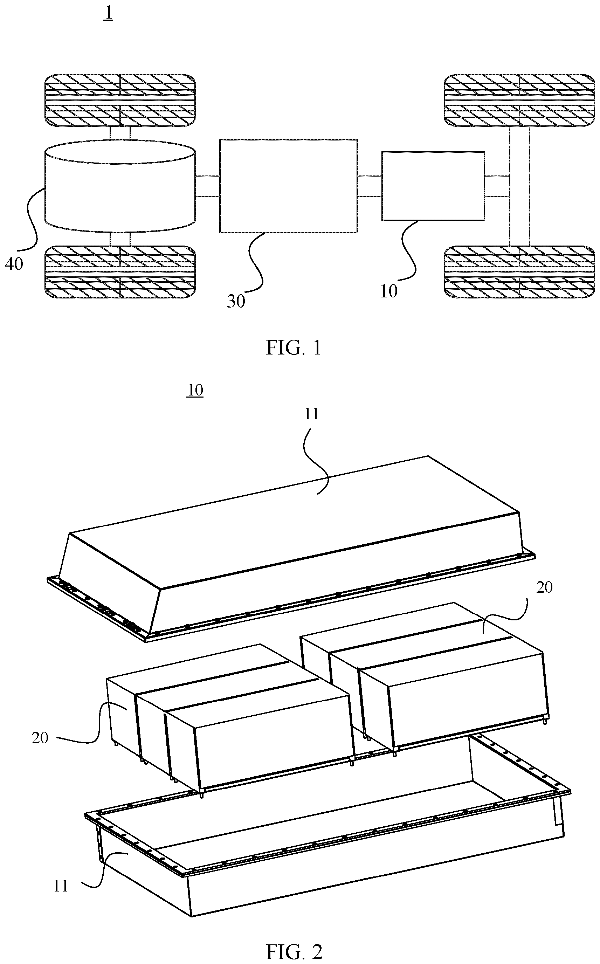

For example, FIG. 1 is a schematic structural diagram of a vehicle 1 according to an embodiment of this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. A motor 40, a controller 30, and a battery 10 may be provided inside the vehicle 1, where the controller 30 is configured to control the battery 10 to supply power to the motor 40. For example, the battery 10 may be provided at the bottom, front, or rear of the vehicle 1. The battery 10 may be configured to supply power to the vehicle 1. For example, the battery 10 may be used as an operational power source for the vehicle 1 that is configured for a circuit system of the vehicle 1, for example, to satisfy power needs of start, navigation, and running of the vehicle 1. In another embodiment of this application, the battery 10 can be used as not only the operational power source for the vehicle 1, but also as a driving power source for the vehicle 1, replacing or partially replacing fossil fuel or natural gas to provide driving traction for the vehicle 1.

To meet different requirements for power use, the battery 10 may include multiple battery cells. For example, FIG. 2 is a schematic structural diagram of a battery 10 according to an embodiment of this application. The battery 10 may include multiple battery cells 20. The battery 10 may further include a box 11. Inside of the box 11 is a hollow structure. The multiple battery cells 20 are accommodated in the box 11. For example, the multiple battery cells 20 are connected in parallel or in series or in series-parallel, and then placed into the box 11.

Optionally, the battery 10 may further include other structures. Details are not described herein again. For example, the battery 10 may further include a busbar that is configured to implement electrical connection between the multiple battery cells 20, for example, in a parallel, series, or series-parallel manner. Specifically, the busbar may implement the electrical connection between the battery cells 20 by connecting electrode terminals of the battery cells 20. Further, the busbar may be fixed to the electrode terminal of the battery cell 20 by welding. Electrical energy of the multiple battery cells 20 may be further drawn out of the box through a conductive mechanism. Optionally, the conductive mechanism may also belong to the busbar.

Based on different power demands, battery cells 20 may be set in any quantity. The multiple battery cells 20 may be connected in series, parallel, or series-parallel to implement large capacity or power. Because the quantity of battery cells 20 included in each battery 10 may be large, for ease of mounting, the battery cells 20 may be arranged in groups, and each group of battery cells 20 forms a battery module. The quantity of the battery cells 20 included in the battery module is not limited, and may be set according to requirements. A battery may include multiple battery modules. These battery modules may be connected in series, parallel, or series-parallel.

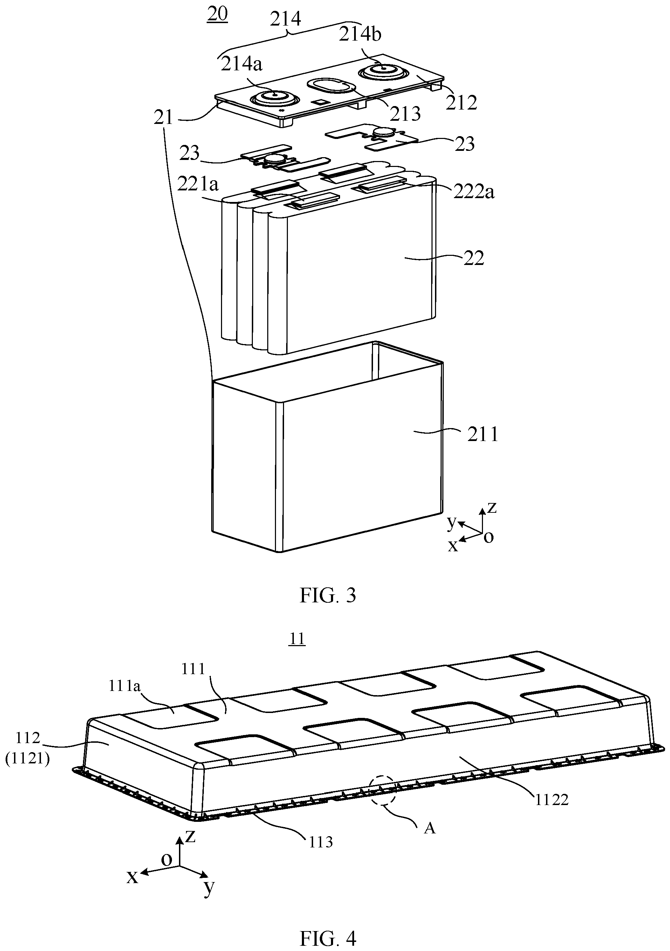

FIG. 3 is a schematic structural diagram of a battery cell 20 according to an embodiment of this application. The battery cell 20 includes one or more electrode assemblies 22, a housing 211, and a cover plate 212. The housing 211 and the cover plate 212 form a casing or battery holder 21. The walls of the housing 211 as well as the cover plate 212 are referred to as the walls of the battery cell 20. For a cuboid battery cell 20, the walls of the housing 211 include a bottom wall and four side walls. A shape of the housing 211 depends on a combined shape of the one or more electrode assemblies 22. For example, the housing 211 may be a hollow cuboid, a cube, or a cylinder, and one surface of the housing 211 has an opening for placing the one or more electrode assemblies 22 into the housing 211. For example, when the housing 211 is a hollow cuboid or cube, one face of the housing 211 is an opening face, which means that the face has no wall so that the inside and the outside of the housing 211 are communicated. When the housing 211 is a hollow cylinder, an end surface of the housing 211 is an opening surface, which means that the end surface has no wall so that the inside and the outside of the housing 211 are communicated. The cover plate 212 covers the opening and is connected to the housing 211 to form an enclosed cavity for placing the electrode assemblies 22. The housing 211 is filled with an electrolyte, for example, a liquid electrolyte.

The battery cell 20 may also include two electrode terminals 214 that may be disposed on the cover plate 212. The cover plate 212 is generally in a shape of a flat plate, and two electrode terminals 214 are fixed on a flat surface of the cover plate 212. The two electrode terminals 214 are a positive electrode terminal 214a and a negative electrode terminal 214b respectively. Each electrode terminal 214 is correspondingly provided with a connection member 23, which may alternatively be referred to as a current collecting member 23, that is located between the cover plate 212 and the electrode assembly 22 for electrically connecting the electrode assembly 22 and the electrode terminal 214.

As shown in FIG. 3, each electrode assembly 22 has a first tab 221a and a second tab 222a. The first tab 221a and the second tab 222a have opposite polarities. For example, when the first tab 221a is a positive electrode tab, the second tab 222a is a negative electrode tab. The first tabs 221a of the one or more electrode assemblies 22 are connected to one electrode terminal through one connection member 23, and the second tabs 222a of the one or more electrode assemblies 22 are connected to the other electrode terminal through the other connection member 23. For example, the positive electrode terminal 214a is connected to the positive electrode tab through one connection member 23, and the negative electrode terminal 214b is connected to the negative electrode tab through the other connection member 23.

In the battery cell 20, one or more electrode assemblies 22 may be provided according to actual use requirements. As shown in FIG. 3, the battery cell 20 is provided with four independent electrode assemblies 22.

The battery cell 20 may also be provided with a pressure relief mechanism 213. The pressure relief mechanism 213 is configured to be actuated when internal pressure or temperature of the battery cell 20 reaches a threshold, so as to relieve the internal pressure or temperature.

The pressure relief mechanism 213 may be various possible pressure relief structures. This is not limited in the embodiments of this application. For example, the pressure relief mechanism 213 may be a temperature-sensitive pressure relief mechanism configured to melt when the internal temperature of the battery cell 20 provided with the pressure relief mechanism 213 reaches the threshold; and/or the pressure relief mechanism 213 may be a pressure-sensitive pressure relief mechanism configured to break when the internal pressure of the battery cell 20 provided with the pressure relief mechanism 213 reaches the threshold.

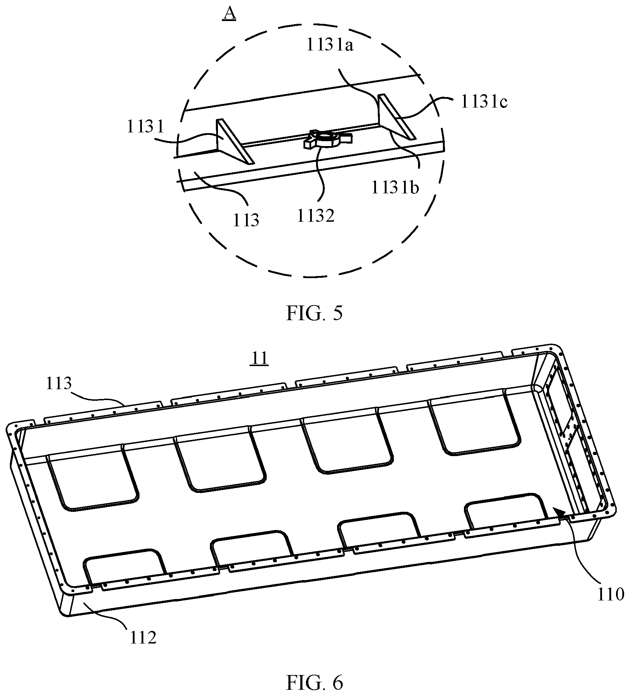

FIG. 4 is a schematic structural diagram of a battery box upper cover according to an embodiment of this application. FIG. 5 is an enlarged schematic diagram of area A in FIG. 4. FIG. 6 is a schematic structural diagram of the battery box upper cover in FIG. 4 from another perspective. As shown in FIGs. 4 to 6, the battery box upper cover 11 includes a top wall 111, a side wall 112, and an edge portion 113. A first end of the side wall 112 is connected to the top wall 111, an opening 110 of the battery box upper cover 11 is formed at a second end of the side wall 112, and the second end is connected to the edge portion 113. The edge portion 113 extends along a first direction at the second end, the first direction being parallel to a plane on which the opening 110 is located and away from the opening 110, a second surface 113b of the edge portion 113 is inclined toward the plane on which the opening 110 is located along the first direction, and a first surface 113a is away from the top wall 111 relative to the second surface 113b.

A battery box usually includes a lower box and a battery box upper cover 11. The lower box is configured to accommodate the battery cells, and the battery box upper cover 11 covers the lower box to implement the sealing of the battery box and the isolation of the battery box from the external environment.

The top wall 111 is a wall of the battery box upper cover 11. The battery box upper cover 11 has an opening 110, and the top wall 111 is opposite the opening 110. Optionally, the top wall 111 is the wall with the largest surface area of the battery box upper cover 11.

A first end of the side wall 112 is connected to the top wall 111, and a second end is connected to the edge portion 113, where the side wall 112 may be arranged perpendicular to the top wall 111 or inclined relative to the top wall 111. For example, when the battery box upper cover 11 is connected to the corresponding lower box and is in a normal working state, the side wall 112 is arranged perpendicular to the top wall 111. At this time, the first end of the side wall 112 is an end away from a bottom of the lower box in a z direction, and the second end of the side wall 112 is an end close to the bottom of the lower box in the z direction.

Optionally, the side wall 112 may include four walls, where the oppositely arranged walls have a same surface area. For example, the two walls with the smallest surface area are the first walls 1121, and the two walls with the largest surface area are the second walls 1122, where the first walls 1121 and the second walls 1122 are respectively connected to the top wall 111 at the first end and connected to the edge portion 113 at the second end. That is to say, the side wall 112 is arranged around the top wall 111, and the edge portion 113 is arranged around the side wall 112.

The edge portion 113 extends along a first direction at the second end, the first direction being parallel to the plane on which the opening 110 is located and away from the opening 110. Optionally, for the edge portion 113 connected to the first wall 1121, the first direction may be the x direction, and the plane on which the opening 110 is located may be a plane parallel to the x and y directions; for the edge portion 113 connected to the second wall 1122, the first direction may be the y direction. That is to say, the first direction is not limited to a single x direction or y direction.

The edge portion 113 includes a first surface 113a and a second surface 113b, the second surface 113b is inclined toward the first surface 113a along the first direction, and the first surface 113a is away from the top wall 111 relative to the second surface 113b. That is to say, the second surface 113b is inclined, which is conducive to the flow of accumulated water and impurities down from the edge portion 113.

Optionally, the first surface 113a is not parallel to the plane on which the opening 110 is located, that is to say, the first surface 113a is inclined relative to the plane on which the opening 110 is located. For example, the first surface 113a is parallel to the second surface 113b.

Optionally, the first surface 113a of the edge portion 113 is parallel to the plane on which the opening 110 is located. That is to say, the first surface 113a is arranged horizontally, which is conducive to the connection and sealing between the edge portion 113 and the corresponding lower box.

Optionally, the top wall 111, the side wall 112, and the edge portion 113 are integrally injection-molded structures, and the molding of the battery box upper cover 11 can be conveniently and efficiently implemented through the injection molding process.

In the embodiment of this application, by setting the first surface 113a of the edge portion 113 to be parallel to the surface where the opening 110 is located, and the second surface 113b to be inclined toward the first surface 113a along the first direction, accumulated water and impurities flowing down from the top wall can flow out of the battery box upper cover 11 along the second surface 113b of the edge portion 113. This arrangement also facilitates the connection and sealing between the battery box upper cover 11 and the lower box. The above setting solves the problem of insufficient safety performance of the battery, that is, it solves the problem of accumulated water and impurities on the battery box upper cover 11, and improves the safety performance of the battery.

Optionally, in one embodiment of this application, a surface of the top wall 111 away from the opening 110 is provided with a recessed portion 111a, and the bottom wall of the recessed portion 111a extends to the first end, where at the first end, the bottom wall of the recessed portion 111a is flush with the side wall 112.

The surface of the top wall 111 away from the opening 110 is provided with the recessed portion 111a, so that accumulated water and impurities on the top wall 111 can flow into the recessed portion 111a. Optionally, a shape of the recessed portion 111a may be rectangular, circular, polygonal, or oval. This is not limited in the embodiments of this application. Optionally, the number of recessed portions 111a may be multiple, and they are symmetrically and evenly distributed on the top wall 111. Compared with a flat top wall 111, the top wall 111 including the recessed portions 111a has higher structural strength, playing a role in structural enhancement.

Optionally, the surface of the top wall 111 away from the opening 110 is provided with multiple rows of recessed portions 111a arranged along the first direction. For example, the first direction is the x direction. As shown in FIG. 4, the surface of the top wall 111 away from the opening 110 is provided with four rows of recessed portions 111a arranged along the x direction, and each row of recessed portions 111a includes two recessed portions 111a. For another example, the first direction is the y direction. As shown in FIG. 4, the surface of the top wall 111 away from the opening 110 is provided with two rows of recessed portions 111a arranged along the y direction, and each row of recessed portions 111a includes four recessed portions 111a. This is conducive to further enhancing the structural strength of the battery box upper cover 11.

The bottom wall of the recessed portion 111a extends to the first end, that is, the recessed portion 111a is connected to the side wall 112. Optionally, only one end of the recessed portion 111a is connected to the side wall 112, or both ends of the recessed portion 111a may be connected to the side wall 112.

At the first end, the bottom wall of the recessed portion 111a is flush with the side wall 112, that is, the connection between the first end and the bottom wall of the recessed portion 111a is flush with the bottom wall of the recessed portion 111a, and there is no height difference between the connection and the bottom wall of the recessed portion 111a. In this way, accumulated water and impurities in the recessed portion 111a can flow out smoothly and flow to the edge portion 113.

Optionally, in one embodiment of this application, reinforcing ribs 1131 are provided at the connection between the side wall 112 and the edge portion 113.

The reinforcing rib 1131 is configured to strengthen the structural strength of the connection between the side wall 112 and the edge portion 113. For example, the reinforcing rib 1131 may be a strip-shaped rib, with one end connected to the side wall 112 and the other end connected to the second surface 113b of the edge portion 113. Since the second surface 113b of the edge portion 113 extends along the first direction and is inclined toward the first surface 113a, compared with an edge portion extending completely horizontally, the inclined edge portion 113 has lower strength at the connection with the side wall 112 and is prone to deformation. The provision of the reinforcing ribs 1131 can enhance the structural strength of the connection between the edge portion 113 and the side wall, avoiding significant deformation of the edge portion 113, which may cause a deterioration in the sealing performance of the battery box upper cover. In addition, compared with increasing a thickness of the edge portion 113 to improve the structural strength of the edge portion 113, the provision of the reinforcing ribs 1131 is conducive to reducing the thickness of the edge portion 113.

Optionally, in one embodiment of this application, the reinforcing rib 1131 is a plate of a triangular shape. The reinforcing rib 1131 includes a first edge 1131a, a second edge 1131b, and a third edge 1131c. The first edge 1131a is connected to the side wall 112; the second edge 1131b is connected to the second surface 113b of the edge portion 113; two ends of the third edge 1131c are respectively connected to the side wall 112 and the second surface 113b. In this way, the reinforcing rib 1131 abuts against and fills the connection between the edge portion 113 and the side wall 112, further enhancing the connection strength between the edge portion 113 and the side wall 112.

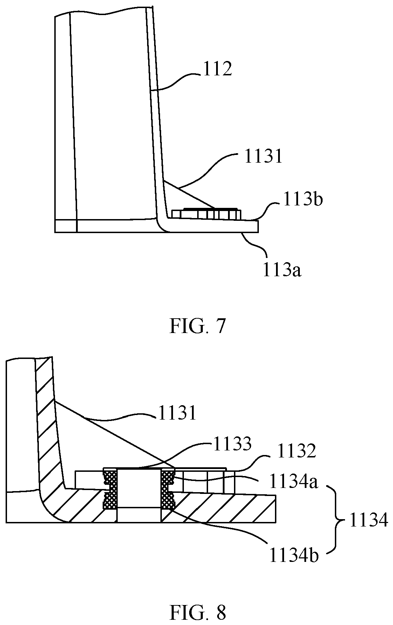

FIG. 7 is a side view of a partial structure of a battery box upper cover according to an embodiment of this application. FIG. 8 is a cross-sectional view of a partial structure of a battery box upper cover according to an embodiment of this application. Optionally, as shown in FIGs. 7 and 8, in one embodiment of this application, the edge portion 113 is provided with a through hole (not shown) penetrating the first surface 113a and the second surface 113b and an insert 1134, the insert 1134 is embedded in the through hole, and the insert 1134 is configured to connect and fix the battery box upper cover 11 and a connecting member 1133 of the corresponding lower box.

The insert 1134 is embedded in the through hole, and the connecting member 1133 can be inserted into the insert. In this way, the connection between the edge portion 113 and the corresponding lower box is implemented through the fit between the insert 1134 and the connecting member 1133. Since the second surface 113b of the edge portion 113 is inclined, it is difficult to use a common bolt and nut locking method to connect the battery box upper cover 11 and the corresponding lower box. Therefore, an insert 1134 is provided to implement the connection between the edge portion and the corresponding lower box, thereby implementing the connection between the battery box upper cover 11 and the corresponding lower box.

Optionally, the insert 1134 is a metal insert, which can ensure a rigid connection between the battery box upper cover 11 and the lower box, reduce torque attenuation, and enhance the reliability of the connection between the battery box upper cover 11 and the lower box.

Optionally, in one embodiment of this application, the insert 1134 and the edge portion 113 are integrally formed. The molding of the insert 1134 is implemented through the injection molding process, which is simple and convenient.

Optionally, in one embodiment of this application, the insert 1134 can be fixedly connected to the edge portion 113 by post-assembly interference pressing. That is to say, a size of the insert 1134 is slightly larger than a size of the through hole, and the insert 1134 is pressed into the through hole in an interference fit manner to implement the connection between the insert 1134 and the edge portion 113.

Optionally, in one embodiment of this application, the insert 1134 includes an embedded part 1134b and a protruding part 1134a. The embedded part 1134b is embedded in the through hole, and the protruding part 1134a protrudes from the second surface 113b. In this way, the embedded part 1134b is embedded in the through hole and connected to the edge portion 113, and the protruding part 1134a is connected to the connecting member 11133 that connects the battery box upper cover and the corresponding lower box.

Optionally, the surface of the insert 1134 in contact with the through hole is an irregular surface, which can increase the friction between the insert 1134 and the through hole, making the connection between the insert 1134 and the edge portion 113 more reliable.

Optionally, in one embodiment of this application, a top surface of the protruding part 1134a away from the edge portion 113 is parallel to the plane on which the opening 110 is located. In this way, the surface of the protruding part 1134a in contact with and connected to the connecting member 1133 is a flat surface, which is conducive to the fit between the two, increasing the reliability of the connection.

Optionally, in one embodiment of this application, a top surface of the reinforcing member 1132 away from the edge portion 113 is parallel to the plane on which the opening 110 is located, and the connecting member 1133 protrudes from the reinforcing member 1132 and the protruding part 1134a. This facilitates the connection between the protruding part 1134a and the connecting member 1133.

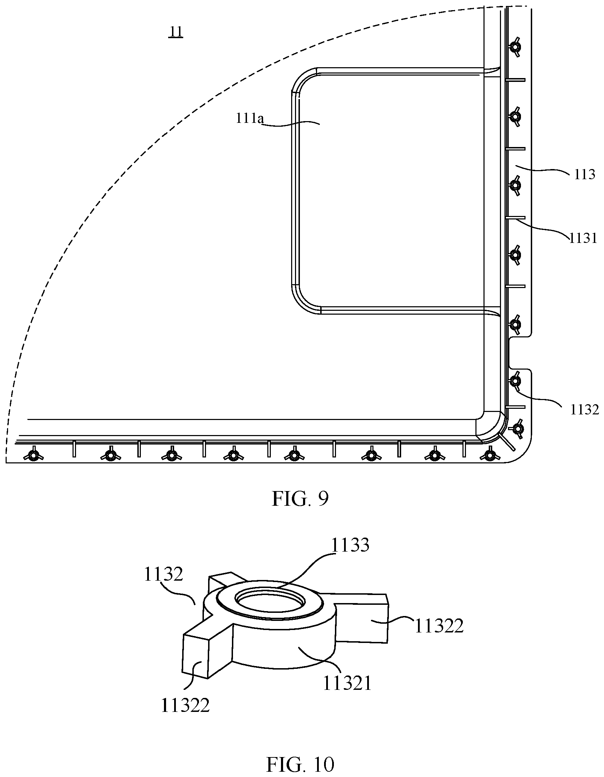

FIG. 9 is a top view of a partial structure of a battery box upper cover according to an embodiment of this application. FIG. 10 is a schematic structural diagram of a reinforcing member according to an embodiment of this application. Optionally, in one embodiment of this application, as shown in FIGs. 8 to 10, a reinforcing member 1132 is provided at the periphery of the protruding part 1134a, and the reinforcing member 1132 is fixedly connected to the protruding part 1134a. In this way, the structural strength of the protruding part 1134a is increased, thereby increasing the structural strength and reliability of the insert 1134.

The reinforcing member 1132 is provided on the second surface 113b, and the reinforcing member 1132 may be annular and surround the protruding part 1134a to enhance the structural strength of the protruding part 1134a.

Optionally, in one embodiment of this application, the reinforcing member 1132 includes a connecting ring 11321 and a guiding rib 11322, the connecting ring 11321 is connected around the protruding part 1134a, and the guiding rib 11322 is connected to the connecting ring 11321 and extends away from the connecting ring 11321. In this way, the connecting ring 11321 enhances the structural reliability of the insert 1134, and the guiding rib 11322 facilitates guiding accumulated water and impurities to flow out in a direction away from the connecting ring 11321, that is, guiding accumulated water and impurities to flow out from the edge portion 113.

A diameter of the connecting ring 11321 is greater than a diameter of the protruding part 1134a, and it is configured to surround the protruding part 1134a on the periphery of the protruding part 1134a.

The guiding rib 11322 can be connected to the connecting ring 11321. It can enhance the structural strength of the connecting ring 11321, and additionally, it can guide accumulated water and impurities to flow out from the edge portion 113.

Optionally, in one embodiment of this application, the reinforcing member 1132 includes three guiding ribs 11322 evenly spaced apart around the connecting ring 11321, and one of the three guiding ribs 11322 extends toward the side wall 112 in a direction opposite the first direction.

The three guiding ribs 11322 are evenly spaced apart, that is, the angle between the three guiding ribs 11322 is 120°, which is conducive to guiding accumulated water and impurities to flow out, and also conducive to enhancing the structural strength of the connecting ring 11321.

Optionally, the number of guiding ribs 11322 may also be two, and the two guiding ribs 11322 respectively form an angle of 120° with the first direction to guide the outflow of accumulated water and impurities. The number of guiding ribs 11322 may be set according to actual need. This is not limited in embodiments of this application.

Optionally, in one embodiment of this application, the battery box upper cover 11 is an integrally injection-molded structure. Putting the raw materials of the battery box upper cover into the corresponding mold can implement the one-time molding of the battery box upper cover 11.

It should be understood that relevant parts in the embodiments of this application can refer to each other. For brevity, details are not repeated herein.

An embodiment of this application further provides a battery box. The battery box may include the battery box upper cover 11 and the lower box in the foregoing embodiments. The battery box upper cover 11 and the lower box fit together to form an accommodating space.

An embodiment of this application further provides a battery. The battery may include battery cells and the battery box in the foregoing embodiments. The battery box is configured to accommodate the battery cells.

An embodiment of this application further provides an electric device. The electric device may include the battery in the foregoing embodiments. The battery is configured to provide electrical energy.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery box upper cover (11), comprising:
a top wall (111), a side wall (112), and an edge portion (113);
wherein a first end of the side wall (112) is connected to the top wall (111), an opening (110) of the battery box upper cover (11) is formed at a second end of the side wall (112), and the second end is connected to the edge portion (113); and
the edge portion (113) extends along a first direction at the second end, the first direction being parallel to a plane on which the opening (110) is located and away from the opening (110), a second surface (113b) of the edge portion (113) is inclined toward the plane on which the opening (110) is located along the first direction, and a first surface (113a) of the edge portion (113) is away from the top wall (111) relative to the second surface (113b).

2. The battery box upper cover (11) according to claim 1, wherein the first surface (113a) is parallel to the plane on which the opening (110) is located.

3. The battery box upper cover (11) according to claim 1 or 2, wherein a surface of the top wall (111) away from the opening (110) is provided with a recessed portion (111a), and a bottom wall of the recessed portion (111a) extends to the first end, wherein at the first end, the bottom wall of the recessed portion (111a) is flush with the side wall (112).

4. The battery box upper cover (11) according to claim 3, wherein the surface of the top wall (111) away from the opening (110) is provided with multiple rows of recessed portions (111a) arranged along the first direction.

5. The battery box upper cover (11) according to any one of claims 1 to 4, wherein reinforcing ribs (1131) are provided at the connection between the side wall (112) and the edge portion (113).

6. The battery box upper cover (11) according to claim 5, wherein the reinforcing rib (1131) is a plate of a triangular shape, and the reinforcing rib (1131) comprises a first edge (1131a), a second edge (1131b), and a third edge (1131c);
wherein the first edge (1131a) is connected to the side wall (112);
the second edge (1131b) is connected to the second surface (113b) of the edge portion (113); and
two ends of the third edge (1131c) are respectively connected to the side wall (112) and the second surface (113b).

7. The battery box upper cover (11) according to any one of claims 1 to 6, wherein the edge portion (113) is provided with a through hole penetrating the first surface (113a) and the second surface (113b) and an insert (1134), the insert (1134) is embedded in the through hole, and the insert (1134) is configured to connect to a connecting member (1133) that fixes the battery box upper cover (11) to a corresponding lower box.

8. The battery box upper cover (11) according to claim 7, wherein the insert (1134) and the edge portion (113) are integrally formed.

9. The battery box upper cover (11) according to claim 7 or 8, wherein the insert (1134) comprises an embedded part (1134b) and a protruding part (1134a), the embedded part (1134b) is embedded in the through hole, and the protruding part (1134a) protrudes from the second surface (113b).

10. The battery box upper cover (11) according to claim 9, wherein a top surface of the protruding part (1134a) away from the edge portion (113) is parallel to the plane on which the opening (110) is located.

11. The battery box upper cover (11) according to claim 9 or 10, wherein a reinforcing member (1132) is provided at the periphery of the protruding part (1134a), and the reinforcing member (1132) is fixedly connected to the protruding part (1134a).

12. The battery box upper cover (11) according to claim 11, wherein the reinforcing member (1132) comprises a connecting ring (11321) and a guiding rib (11322), the connecting ring (11321) is connected around the protruding part (1134a), and the guiding rib (11322) is connected to the connecting ring (11321) and extends away from the connecting ring (11321).

13. The battery box upper cover (11) according to claim 12, wherein the reinforcing member (1132) comprises three guiding ribs (11322) evenly spaced apart around the connecting ring (11321), and one of the three guiding ribs (11322) extends toward the side wall (112) in a direction opposite the first direction.

14. The battery box upper cover (11) according to any one of claims 1 to 13, wherein the battery box upper cover (11) is an integrally injection-molded structure.

15. A battery box, comprising:
the battery box upper cover (11) according to any one of claims 1 to 14; and
a lower box, wherein the battery box upper cover (11) and the lower box fit together to form an accommodating space.

16. A battery, comprising:
battery cells; and
the battery box according to claim 15, wherein the battery box is configured to accommodate the battery cells.

17. An electric device, comprising the battery according to claim 16, wherein the battery is configured to provide electrical energy.
